# EUROPEAN PATENT SPECIFICATION

(11) **EP 2 036 376 B1**
(45) Date of publication and mention of the grant of the patent: **08.08.2012**
(21) Application number: 06763767.8
(22) Date of filing: 16.06.2006
(51) Int. Cl.: H04W 48/20, H04W 36/14

(54) **CELL SELECTION/RESELECTION MECHANISM FOR A MOBILE COMMUNICATION SYSTEM**
ZELLENAUSWAHL-/-NEUAUSWAHLMECHANISMUS FÜR EIN MOBILKOMMUNIKATIONSSYSTEM
MÉCANISME DE SÉLECTION/RESÉLECTION DE CELLULES POUR UN SYSTÈME DE COMMUNICATION MOBILE

(43) Date of publication of application: 18.03.2009
(73) Proprietor: Telefonaktiebolaget LM Ericsson (publ), 164 83 Stockholm (SE); Nylander, Tomas, 13934 Värmdö (SE)
(72) Inventor: HALLENSTÅL, Magnus, 18750 Täby (SE); VIKBERG, Jari Tapio, 15338 Järna (SE)
(74) Representative: Lind, Robert
(86) International application number: PCT/EP2006/063301
(87) International publication number: WO 2007/144029

(56) References cited:
- WO-A-01/26409
- WO-A-2005/027561
- TURINA D ET AL: "Traffic steering and service continuity in GSM-WCDMA seemless networks" TELECOMMUNICATIONS, 2005. CONTEL 2005. PROCEEDINGS OF THE 8TH INTERNATIONAL CONFERENCE ON ZAGREB, CROATIA JUNE 15-17, 2005, PISCATAWAY, NJ, USA,IEEE, 15 June 2005 (2005-06-15), pages 77-82, XP010810292 ISBN: 953-184-081-4
- REXHEPI V ET AL: "Handover of packet-switched services in GERAN A/Gb mode" GLOBAL TELECOMMUNICATIONS CONFERENCE, 2005. GLOBECOM '05. IEEE ST. LOIUS, MO, USA 28 NOV.-2 DEC. 2005, PISCATAWAY, NJ, USA,IEEE, 28 November 2005 (2005-11-28), pages 2589-2593, XP010879299 ISBN: 0-7803-9414-3
- "Digital cellular telecommunications system (Phase 2+)" ETSI STANDARDS, EUROPEAN TELECOMMUNICATIONS STANDARDS INSTITUTE, SOPHIA-ANTIPO, FR, vol. 3-G1, no. V671, April 2006 (2006-04), XP014034470 ISSN: 0000-0001 cited in the application
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R2, no. V630, March 2006 (2006-03), XP014034122 ISSN: 0000-0001
- "Universal Mobile Telecommunications System (UMTS)" ETSI STANDARDS, EUROPEAN TELECOMMUNICATIONS STANDARDS INSTITUTE, SOPHIA-ANTIPO, FR, vol. 3-R2, no. V690, March 2006 (2006-03), XP014034276 ISSN: 0000-0001

## Description

### Field of the Invention

This invention relates to a cell selection/reselection mechanism for a mobile communication system. In particular, the invention relates to a method and apparatus for enabling a mobile station (MS) - or user equipment (UE) in 3G parlance - to select a cell in which to camp in idle mode, in order to receive the most appropriate service support upon session activation.

### Background to the Invention

IP Multimedia (IPMM) is an example of a service which provides a dynamic combination of voice, video, messaging, data, etc, within the same session. By growing the numbers of basic applications and the media which it is possible to combine, the number of services offered to the end users will grow, and the inter-personal communication experience will be enriched. This will lead to a new generation of personalised, rich multimedia communication services, e.g. peer-to-peer multimedia communication, IPTV etc.

These services can be based on the IP Multimedia Subsystem (IMS) architecture, which is the technology defined by the Third Generation Partnership Project (3GPP) to provide IP Multimedia services over mobile communication networks (3GPP TS 22.228, TS 23.228, TS 24.229, TS 29.228, TS 29.229, TS 29.328 and TS 29.329 Releases 5 to 7). The IMS makes use of the Session Initiation Protocol (SIP) to set up and control calls or sessions between user terminals (or user terminals and application servers). The Session Description Protocol (SDP), carried by SIP signalling, is used to describe and negotiate the media components of the session. Other multimedia applications which can be used for media transmission and control include Real-time Transport Protocol and Real-time Transport Control Protocol (RTP/RTCP), Message Session Relay Protocol (MSRP), and Hyper Text Transfer Protocol (HTTP).

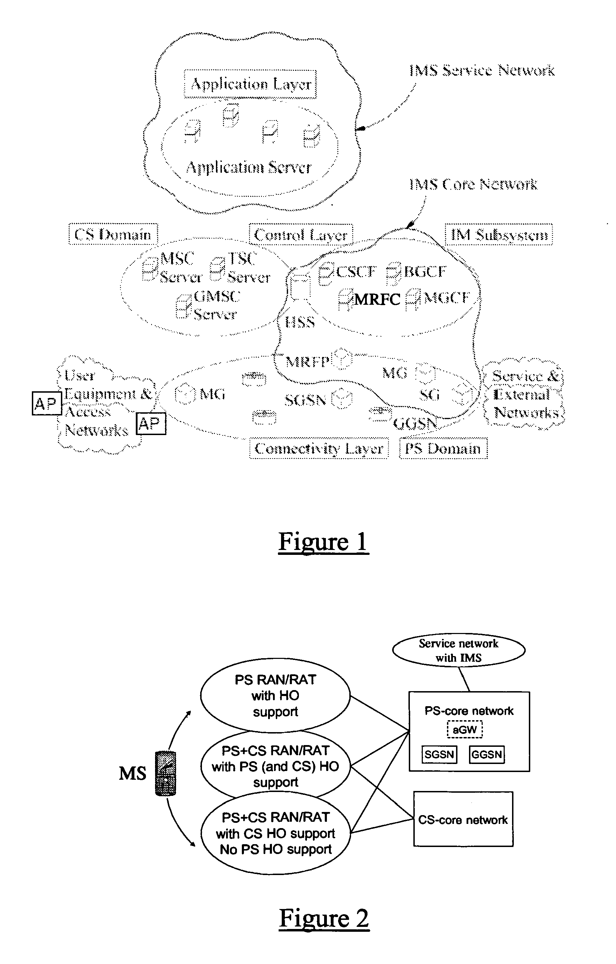

Figure 1 illustrates schematically how the IMS fits into the mobile network architecture in the case of a 3GPP PS access network. Call/Session Control Functions (CSCFs) operate as SIP proxies with the IMS. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

A fundamental requirement for real-time service provision is the seamless handover of services for subscribers roaming across cell boundaries of the radio access network (RAN) or subscribers roaming across RAN or radio access technology (RAT) boundaries (e.g. moving between 2G, 3G and/or LTE networks). Traditional circuit switched (CS) based call services have been designed to meet this requirement. In the case of 2G and currently implemented 3G networks, PS real time handover with low latency is not provided for, although service continuity is achieved at the terminal side by ordering a session to be moved from one cell to the other, i.e. there is no prepare phase to shorten latency when moving cell. Real time PS handover is standardized in 3GPP for 3G networks, but the feature has not yet been deployed. It is expected that when High-Speed Downlink Packet Access (HSDPA) is deployed, or shortly thereafter, the mechanisms needed for fast PS handover will also be deployed. For 2G networks, fast and efficient PS handover procedures in the packet switched (PS) domain have only recently been standardized in 3GPP TS 43.129, and in the initial implementation stage, roll-out of this feature across 3G networks will inevitably be patchy. In addition, support for PS handover in 2G networks such as GSM/GPRS networks is never likely to be comprehensive (if implemented at all), yet handover of PS calls would be desirable as 2G networks will continue to provide a fallback network for 3G subscribers in the case of limited 3G network coverage. It can also expected that the next generation radio and core networks which are currently being specified under the name LTE (Long Term Evolution) and SAE (System Architecture Evolution) in 3GPP will also have limited coverage, and that these networks will also require fallback to 3G and 2G networks.

It is expected that in the future all peer-to-peer multimedia communications in the mobile network will run over the PS domain. In particular, as voice calls are just a special variant of peer-to-peer multimedia communication, all voice calls will be Voiceover-IP (VoIP) calls. VoIP calls will be particularly sensitive to even relatively minor service interruptions caused by inter-cell handovers. As long as a terminal engaged in a VoIP call can perform PS handover to another cell (the "target cell"), the interruption can be kept short enough to avoid any noticeable drop in perceived quality. However, if either the current cell or the target cell do not support PS handover, a noticeable interruption is likely to occur as packets will be lost or delayed during the transition period. Consequently, until all RAN cells support PS handover, the provision of IMS services such as voice and video calls utilising the PS domain is likely to result in users receiving a reduced quality of service when crossing cell boundaries.

International patent application number PCT/EP04/05333 describes a process for allowing the IMS to automatically establish a VoIP call over a CS network when a user requests the VoIP call using signalling sent over a PS network. In this way, the IMS ensures that the appropriate Quality of Service (QoS) is applied to the call. In addition, the VoIP CS call will benefit from the seamless handovers afforded by the CS domain, if and when the user moves into a neighbouring cell. The procedure involves the establishment of a CS leg between the IMS and the Mobile Switching Centre (MSC) in order to link the CS access network leg to the IMS. This is achieved using an inter MSC handover procedure.

The disadvantage associated with the above proposal is that a VoIP call is automatically carried over the CS network even if the PS network is able to provide a satisfactory QoS for the VoIP call. In addition, the process of transferring the call to the CS network will consume significant resources within the network and, where the PS network can support the call, this will be wasted effort. Moreover, the above proposal is concerned with the establishment of a VoIP call in the cell in which the mobile station (MS) has selected, based on measured signal strength, regardless of the PS handover capabilities of that particular cell.

In the PS domain, a MS can generally be said to be in one of three different mobility management states. For UMTS these are:
- PMM-DETACHED State
   Here the MS (or its location) is not known to the network and it has no IP address, i.e. it has not "logged on" to the PS domain;
- PMM-IDLE State
   The MS has "logged on" to the PS domain and it has an IP address, but it is not engaged in a session/call. The network knows which Routing Area the MS is in, but not the specific cell within that Routing Area. [A Routing Area comprises a set of cells under which the system can page a MS if it wants to start a session.] Typically, all of the cells within a Routing Area will share the same capabilities. It is the role of the MS to decide the most appropriate cell and thus Routing Area for it to camp on. Once camped within a chosen cell, the MS will select, based upon measured signal strength, and chooses a particular cell over which to send Routing Area updates (as needed) to the network and over which to initiate calls/sessions; and
- PMM-CONNECTED State
   The MS location is known by the network.

The corresponding states in GPRS are: IDLE state, STANDBY state and READY state.

When the MS is in PMM-IDLE state or STANDBY state, as well as selecting a cell to camp on, it can also select which Radio Access Technology (RAT) to camp on, WCDMA or GPRS, depending on MS preferences. When LTE (Long Term Evolution) networks are introduced, yet another RAT will be available. For the sake of simplicity in this document, UMTS PMM-IDLE state and GPRS STANDBY state and corresponding LTE/SAE state will be denoted as the MS being in idle mode

The article "Traffic Steering and Service Continuity in GSM- WCDMA Seamless Networks" by D. Turina et al, 8th Int. Conf. on Telecommunications, ConTEL 2005, describes procedures for steering dual-mode terminal users to camp on either a GSM or a WCDMA network.

### Summary of the Invention

According to the state of the art, the MS itself has no knowledge of the packet switched handover capabilities of any particular cell (or Routing Area) or RAT and therefore is not able to take this factor into account when selecting a cell (and Routing Area) or RAT within which to camp. This means that a MS that is capable of VoIP in the PS domain may be camped unknowingly in a cell of a Routing Area or RAT that does not support PS handover, even though another available cell (and Routing Area) or RAT does have this capability.

According to a first aspect of the present invention there is provided a method of operating a mobile station within one or more radio access networks, the method comprising:
receiving system information messages broadcast by a radio access network, these messages indicating support within the broadcasting network for a packet switched handover procedure at the cell or Routing Area level; and
using the indicated support for packet switched handover as a factor in selecting a cell of a radio access network/technology and/or a Routing Area of a radio access network within which to camp.

The invention is applicable in particular to mobile stations operating in an idle mode.

Where a plurality of radio access networks/radio access technologies are available to the mobile station, these networks/technologies may employ the same or different radio access technologies. Radio access technologies include; GPRS, UMTS, and LTE. Of course, a single radio access network may make available two or more radio access network technologies, e.g. UMTS and LTE, in which case a mobile station may choose one of the available technologies on which to camp.

Embodiments of the invention allow the mobile station to choose to camp in a cell of a Routing Area and optionally radio access network/technology that is most suitable for supporting the types of sessions/calls that it is likely to be used for. Consequently, a mobile station that is capable of VoIP can select a cell (or Routing Area) and radio access technology that supports PS handover, thus ensuring that if and when a VoIP call is established in a particular cell within the Routing Area and radio access network/technology, there is at least a possibility that the call can be handed over to a PS bearer in a neighbouring cell (actual handover will of course depend upon the neighbouring cell also supporting PS handover). As all cells within a Routing Area are likely to have the same capabilities, the chances of the neighbouring cell also supporting PS handover are increased if both cells are within the same Routing Area.

Conveniently, a field indicating support for PS handover is broadcast where applicable. The absence of this field may be taken by the mobile station to indicate a lack of support for PS handover by the sending cell.

Optionally, a field indicating support for PS handover across an entire network/technology is broadcast where applicable. Similarly to the above, the absence of this field may be taken by the mobile station to indicate that the radio access network of the broadcasting cell does not support PS handover across all of its cells.

In another embodiment of the invention, the information broadcast about the capabilities of the cells comprises one or more of the following:
The Quality of Service supported;
The types of traffic supported;
The peak throughput for the Quality of Service supported;
The peak throughput for the types of traffic supported;
Current traffic load; and
An indication of standardised profiles which are supported.

Optionally, the mobile station analyses the broadcast information to determine the suitability of the cells taking into consideration information stored in the mobile station regarding the likely use of the mobile station.

According to a second aspect of the present invention there is provided a mobile station for use within one or more radio access networks, the mobile station comprising:
means for receiving system information messages broadcast by a radio access network, these messages indicating support within the broadcasting network for a packet switched handover procedure at the cell or Routing Area level; and
means for using the indicated support for packet switched handover as a factor in selecting a cell of a radio access network/technology within which to camp.

Acording to a third aspect of the present invention there is provided apparatus comprising means for causing an indication of support, within a cell or Routing Area, for a packet switched handover procedure, to be broadcast to listening mobile stations.

The apparatus of the third aspect of the present invention may be a Radio Network Controller of a UMTS radio access network, a Base Station Controller of a GSM access network, or an appropriate node of a LTE-based network.

### Brief Description of the Drawings

Figure 1 illustrates schematically the integration of an IP Multimedia Subsystem into a 3G mobile communications system; and
Figure 2 illustrates the relationship and interfaces between multiple radio access networks, circuit switched and packet switched core networks, and a service network; and

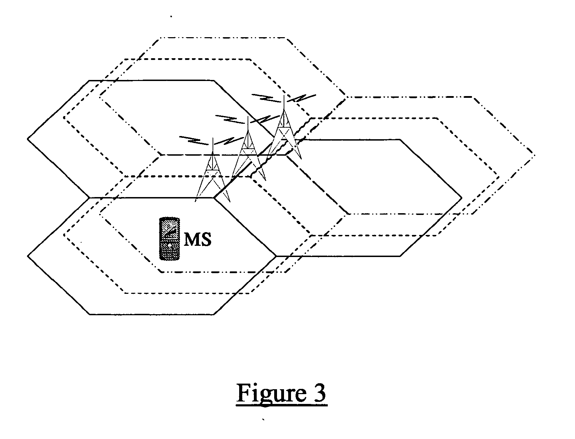

Figure 3 illustrates schematically three overlaid radio access networks having respective different radio access network technologies.

### Detailed Description of Certain Embodiments

With reference to Figure 2, there is illustrated a mobile station (MS) which may be attached to one of three radio access networks (RANs). The upper two RANs shown in the Figure support packet switched (PS) handover while the lower RAN only supports circuit switched (CS) handover. For the purpose of this discussion, the upper RAN is assumed to be a LTE based network, the middle RAN is assumed to be a UMTS Terrestrial RAN (UTRAN) comprising a Radio Network Controller (RNC) that will allocate transmission bandwidth to subscribers, and the lower RAN is assumed to be a GSM/GPRS RAN comprising a Base Station Controller (BSC) that will allocate transmission bandwidth to subscribers.

Within the 3GPP 2G and 3G PS core network, PS services are facilitated by a Serving GPRS Support Node (SGSN) and a Gateway GPRS Support Node (GGSN). [In 3GPP SAE/LTE the current standard's view is that the PS service will be facilitated by a socalled aGW (access GateWay).] For the 2G and 3G cases, the GGSN is coupled to the IMS core network. In order to access the IMS, the MS must first register with the IMS using the Session Initiation Protocol (SIP) REGISTER message. To establish and control an IMS service, the MS exchanges further SIP messages with the S-CSCF. SIP messages are transported via a physical PS transport channel. Within the IMS, the P-CSCF is responsible for requesting and releasing PS network resources at the GGSN.

The present proposal aims to enable a mobile station (MS) operating in idle mode to select a cell of a Routing Area and/or Radio Access Technology in which to camp. As already described above, a Routing Area comprises a set of cells under which the network can page the MS. The Radio Access Technology is the technology used on the radio interface between the base station and the MS, e.g. CDMA, TDMA, OFDM etc. The MS is able to make an informed selection based upon a knowledge of the capabilities of the cells, Routing Areas or RATs within RANs. Thus, a MS can select to camp in a cell of a Routing Area and/or RAT that is most suitable for supporting the types of sessions/calls that are likely to be activated. By way of example, if VoIP is likely to be employed, the MS can preferentially select a Routing Area and/or RAT that supports PS handover. This reduces the risk of a VoIP call being initiated over a PS bearer within a cell from which handover of the call to a PS bearer within a neighbouring cell is not possible.

In order to implement the present invention, it is necessary that information regarding the capabilities of cells, Routing Areas and RATs be broadcast to listening MSs. In the case of a 2G network, this information may be incorporated into the System Information messages that are broadcast in a cell of a radio access network (RAN). In UMTS it is the RNC that facilitates this, in GSM/GPRS it is the BSC, and in LTE it is the base station. The MS is then able to take the broadcast information into account when selecting a cell of a Routing Area and/or RAT within which to camp.

In the idle mode, a MS continuously monitors the strengths of the radio signals from the cells in the area. It also receives the information broadcast regarding the support for PS handover, in accordance with the present invention. This information provides information about the capabilities of the cells, Routing Areas and RATS (whether they are operated by the same or different RANs). Thus, an indication of support by a cell or Routing Area or RAT for a packet switched handover procedure, enables the MS to preferentially select to camp in a cell of that particular Routing Area and/or RAT.

Referring again to Figure 2, the upper two RANs, which supports PS handover, will broadcast this capability. Each RAN is configured as a number of Routing Areas, each of which comprise of a number of individual cells. PS handover may or may not be supported within a cell, although typically all cells within the same Routing Area (and possibly RAT) will share the same profile, i.e. they will all support PS handover or they will not. If the MS is likely to be used for VoIP calls, it can use the broadcast information to enable it to select to camp in a cell of a Routing Area and/or RAT which comprises cells that support PS handover. If possible (i.e. if the RAN broadcasts the necessary network-wide information), the MS will select to camp in a cell of a Routing Area and/or RAT within a RAN which supports PS handover across its network, thereby eliminating problem of bad quality of Service - for example clips - when passing cell boundaries. By way of illustration, a MS roaming abroad may have a choice of several network providers. If one provider advertises that it is able to support PS handover across its entire network whilst another supports it only within the routing area within which the MS is currently located, the MS may select that network provides full coverage.

In order to avoid changes in existing RANs (BSS and UTRAN), the absence of a PS handover support indication is interpreted to mean that PS handover is not supported.

The present invention also allows for additional cell capabilities to be broadcast in order to enable the MS to choose the most appropriate Routing Area within which to camp. Thus, static information, i.e. relating to the physical capabilities of the cells, may be broadcast. Some examples of such information are:
- Supported Quality of Service (QoS).
- Supported Traffic classes.

e.g. Conversational Real Time (RT), Streaming RT, Interactive and/or Background Information.
- Peak throughput (e.g. in kbits/s) for each of the supported QoS/Traffic Classes e.g. Conversational RT is supported up to 32 kbits/s in a symmetric way.
- Other relevant attributes for the different supported QoS/Traffic classes.
- Current traffic load: this will change dynamically over time depending on current traffic in a cell, Routing Area and/or RAT.
- Standardized Profiles which are supported.
This feature will simplify the cell capability information that is required to be broadcast since specific standard profiles can be created so that only the supported profiles need be indicated and not each of the individual characteristics.

It may also be possible to broadcast dynamic cell information, i.e. relating to the resources available in a cell at a particular point in time. One example of such information is the Current traffic load described above.

In a particular embodiment of the present invention, the MS is capable of determining the suitability of the available cells in relation to information stored in the MS regarding the likely use of the MS. Thus, for example, if the user mainly uses the streaming service, the MS could include an algorithm to recognize that so that it can try to camp in a Routing Area and/or RAT with cells which support the QoS class streaming.

It will be appreciated by persons skilled in the art that various modifications may be made to the above embodiments without departing from the scope of the present invention. For example, whilst the above discussion has been concerned with a 2G access network, the invention is equally applicable to a 3G access network and to overlapping 2G and 3G networks. The invention is also applicable to future generation networks such as 3GPP LTE/SAE.

## Claims

1. A method of operating a mobile station (MS) within one or more radio access networks, the method comprising:
receiving system information messages broadcast by a radio access network, these messages indicating support within the broadcasting network for a packet switched handover procedure at the cell or Routing Area level; and
using the indicated support for packet switched handover as a factor in selecting a cell of a radio access network/technology and/or a Routing Area of a radio access network within which to camp.

2. A method according to claim 1, wherein the or each radio access network employs one of the following technologies; GPRS, UMTS, and LTE.

3. A method according to any one of the preceding claims, the mobile station selecting to camp in a cell of a radio access network/technology that supports PS handover where this is available.

4. A method according to any one of the preceding claims, the mobile station analysing the broadcast information to determine the suitability of the cells taking into consideration information stored in the mobile station regarding the likely use of the mobile station.

5. A method according to any one of the preceding claims, wherein the mobile station is operating in idle mode.

6. A mobile station (MS) for use within one or more radio access networks, the mobile station comprising:
means for receiving system information messages broadcast by a radio access network, these messages indicating support within the broadcasting network for a packet switched handover procedure at the cell or Routing Area level; and
means for using the indicated support for packet switched handover as a factor in selecting a cell of a radio access network/technology within which to camp.

7. Apparatus comprising:
means for causing an indication of support, within a cell or Routing Area, for a packet switched handover procedure, to be broadcast to listening mobile stations (MS).

8. Apparatus according to claim 7, the apparatus being one of a Radio Network Controller of a UMTS radio access network, a Base Station Controller of a GSM access network, and an appropriate node of a LTE-based network.

## Patentansprüche

1. Verfahren zum Betreiben einer Mobilstation (MS) innerhalb eines oder mehrerer Funkzugangsnetze, wobei das Verfahren Folgendes umfasst:
Empfangen von Systeminformationsnachrichten, die durch ein Funkzugangsnetz rundgesendet werden, wobei diese Nachrichten Unterstützung innerhalb des Rundsendenetzes für eine paketvermittelte Handover-Prozedur auf der Zellen- oder Routing-Bereich-Ebene anzeigen; und
Verwenden der angezeigten Unterstützung für paketvermittelten Handover als einen Faktor beim Auswählen einer Zelle eines Funkzugangsnetzes/einer Technologie und/oder eines Routing-Bereichs eines Funkzugangsnetzes, um darauf zu campen.

2. Verfahren nach Anspruch 1, worin das oder jedes Funkzugangsnetz eine der folgenden Technologien einsetzt: GPRS, UMTS und LTE.

3. Verfahren nach einem der vorhergehenden Ansprüche, wobei die Mobilstation auswählt, auf einer Zelle eines Funkzugangsnetzes/einer Technologie zu campen, die paketvermittelten (PS) Handover unterstützt, wo dieser verfügbar ist.

4. Verfahren nach einem der vorhergehenden Ansprüche, wobei die Mobilstation die Rundsendeinformation analysiert, um die Eignung der Zellen zu bestimmen, wobei in der Mobilstation gespeicherte Information berücksichtigt wird, die die wahrscheinliche Verwendung der Mobilstation betrifft.

5. Verfahren nach einem der vorhergehenden Ansprüche, wobei die Mobilstation im Idle-Modus arbeitet.

6. Mobilstation (MS) zur Verwendung innerhalb eines oder mehrerer Funkzugangsnetze, wobei die Mobilstation Folgendes umfasst:
Mittel zum Empfangen von Systeminformationsnachrichten, die durch ein Funkzugangsnetz rundgesendet werden, wobei diese Nachrichten Unterstützung innerhalb des Rundsendenetzes für eine paketvermittelte Handover-Prozedur auf der Zellen- oder Routing-Bereich-Ebene anzeigen; und
Mittel zum Verwenden der angezeigten Unterstützung für paketvermittelten Handover als einen Faktor beim Auswählen einer Zelle eines Funkzugangsnetzes/einer Technologie, um darauf zu campen.

7. Vorrichtung, Folgendes umfassend:
ein Mittel, um innerhalb einer Zelle oder eines Routing-Bereichs zu veranlassen, dass eine Unterstützungsanzeige für eine paketvermittelte Handover-Prozedur an mithörende Mobilstationen rundgesendet wird.

8. Vorrichtung nach Anspruch 7, wobei die Vorrichtung eine von Folgenden ist: ein Funknetz-Controller eines UMTS-Funkzugangsnetzes, ein Basisstation-Controller eines GSM-Zugangsnetzes und ein geeigneter Knoten eines LTE-basierten Netzes.

## Revendications

1. Procédé destiné à exploiter une station mobile (MS) dans un ou plusieurs réseaux d'accès radio, le procédé comprenant les étapes ci-dessous consistant à :
recevoir des messages d'informations système diffusés par un réseau d'accès radio, ces messages indiquant la prise en charge, au sein du réseau de diffusion, d'une procédure de transfert intercellulaire à commutation de paquets au niveau de la cellule ou au niveau de la zone d'acheminement ; et
utiliser la prise en charge indiquée, pour le transfert intercellulaire à commutation de paquets, en qualité de facteur en vue de la sélection d'une cellule d'une technologie/d'un réseau d'accès radio et/ou d'une zone d'acheminement d'un réseau d'accès radio dans laquelle stationner.

2. Procédé selon la revendication 1, dans lequel le ou chaque réseau d'accès radio emploie l'une des technologies suivantes : GPRS, UMTS et LTE.

3. Procédé selon l'une quelconque des revendications précédentes, dans lequel la station mobile choisit de stationner dans une cellule d'une technologie/d'un réseau d'accès radio qui prend en charge un transfert intercellulaire à commutation PS lorsque celui-ci est disponible.

4. Procédé selon l'une quelconque des revendications précédentes, dans lequel la station mobile analyse les informations diffusées en vue de déterminer la pertinence des cellules en prenant en considération les informations stockées dans la station mobile relativement à l'utilisation probable de la station mobile.

5. Procédé selon l'une quelconque des revendications précédentes, dans lequel la station mobile opère en mode de repos.

6. Station mobile (MS) destinée à être utilisée dans un ou plusieurs réseaux d'accès radio, la station mobile comprenant :
un moyen pour recevoir des messages d'informations système diffusés par un réseau d'accès radio, ces messages indiquant la prise en charge, au sein du réseau de diffusion, d'une procédure de transfert intercellulaire à commutation de paquets au niveau de la cellule ou au niveau de la zone d'acheminement ; et
un moyen pour utiliser la prise en charge indiquée, pour le transfert intercellulaire à commutation de paquets, en qualité de facteur en vue de la sélection d'une cellule d'une technologie/d'un réseau d'accès radio dans laquelle stationner.

7. Dispositif comprenant :
un moyen pour occasionner une indication de prise en charge, dans une cellule ou une zone d'acheminement, d'une procédure de transfert intercellulaire à commutation de paquets, à diffuser à des stations mobiles à l'écoute (MS).

8. Dispositif selon la revendication 7, dans lequel le dispositif est l'un parmi un contrôleur de réseau radio d'un réseau d'accès radio de système UMTS, un contrôleur de station de base d'un réseau d'accès de système GSM, et un noeud pertinent d'un réseau basé sur la technologie LTE.
